# EUROPEAN PATENT APPLICATION

(11) **EP 2 928 098 A1**
(43) Date of publication of application: **07.10.2015**
(21) Application number: 14305467.4
(22) Date of filing: 31.03.2014
(51) Int. Cl.: H04J 14/02

(54) **A method for provisioning optical connections in an optical network**

(71) Applicant: ALCATEL LUCENT, 92100 Boulogne-Billancourt (FR)
(72) Inventor: Charlet, Gabriel, 91620 Nozay (FR); Morea, Annalisa, 91620 Nozay (FR)
(74) Representative: Loyer & Abello

(57) **Abstract**

A method for provisioning optical connections in an optical network (118), the method comprises:
- providing a plurality of connection demands,
- selecting working paths (6) and provisioning working optical connections for satisfying all priority demands,
- selecting protection paths (7) disjoint from the working paths and provisioning protection optical connections for satisfying all priority demands,
- computing a first virtual transparent topology consisting of a first remaining available capacity (14) of the provisioned optical connections,
- selecting working paths within the virtual transparent topology and provisioning transparent tunnels (14) satisfying all non-priority demands,
- selecting working paths and provisioning additional working optical connections for satisfying any remaining non-priority demands,
- computing a second virtual topology consisting of a second remaining available capacity, and
- selecting protection paths within the second transparent virtual topology and provisioning transparent tunnels (104) for protecting a non-priority demand using the second remaining capacity.

## Description

### Field of the invention

The invention relates to the technical field of optical communication systems, in particular methods and systems for network sizing and provisioning.

### Background

Transparent mesh networks are networks that employ optical bypass of intermediate nodes whenever possible, and no regenerators whenever possible. A regenerator is an Optical/Electrical/Optical repeater to help an optical signal to continue its journey successfully when the signal becomes weaker and distorted after having travelled through a significant distance. Indeed, optical signals are degraded while propagating in the optical medium due to physical effects.

Path protection is an end-to-end protection scheme to protect against accidental failures on service providers' network that might affect the services offered to end customers. Any failure occurred at any point along the path of a circuit will cause the end nodes to re-route traffic on a new path that is disjoint from the former path. The new path is called a protection path and can be engineered during the design phase of the network on different ways. The protection path can be a dedicated path, meaning that a second disjoint path is found and a second optical connection is engineered along the protection path and exclusively dedicated to a specific traffic exclusively in case of failure. The protection connection can also be shared by two traffics from different risk groups. The two ways above described are respectively called Dedicated Back up Path Protection (1+1) and Shared Back up Path Protection (1:1).

Traffic capacity is created from a source node to a destination node in response to a customer connection demand. The quality of service for this traffic can be either a first class service or a second class service. The first class service is the quality of service of a traffic that is compulsory protected by a protection path in order to be recovered in case of failure of the working path. This traffic may be called first class traffic, priority traffic or also gold traffic. It will be referred to as priority traffic in the following. The second class traffic is a traffic that is not mandatory protected by any protected path in case of failure. This traffic is called a second class traffic, a non-priority traffic or also a best-effort traffic. In the following, it will be referred to as non-priority traffic.

It is preferable to limit as far as possible the number of regenerators in an optical network as they are energy-greedy and costly.

### Summary

In an embodiment, the invention provides a method for provisioning optical connections in an optical network (118) having a defined physical topology.

According to embodiments, such a method can comprise one or more of the steps below.
providing a plurality of connection demands, each connection demand comprising a source node (A), a destination node (B), a capacity (3), and a quality of service, and wherein the quality of service is selected in a group comprising a priority class (11) and a non-priority class (12)
selecting working paths (6, 16) and provisioning working optical connections (115) along the working paths for satisfying all priority demands,
selecting protection paths (7, 17) wherein the protection path for a connection demand is disjoint from the working path for said connection demand and provisioning protection optical connections (125) along the protection paths for satisfying all priority demands,
computing a first virtual transparent topology consisting of a first remaining available capacity (4) of the provisioned optical connections,
selecting working paths within the virtual transparent topology and provisioning transparent tunnels (2, 14) along the working paths satisfying all non-priority demands for which the virtual transparent topology comprises a remaining capacity sufficient to satisfy the non-priority demands,
selecting working paths and provisioning additional working optical connections for satisfying any remaining non-priority demands,
computing a second virtual topology consisting of a second remaining available capacity of all provisioned optical connections, and
selecting protection paths within the second transparent virtual topology and provisioning transparent tunnels (1, 104) along the protection paths for protecting a non-priority demand using the second remaining capacity,
providing a connection map for implementing the provisioned connections in the optical network.

According to embodiments, such a method can comprise one or more of the features below
the source node for a connection demand comprises an optical transponder capable of generating optical signals modulated in accordance with a plurality of modulation formats,
the provisioning of an optical connection from the source node comprises selecting a modulation format of the optical transponder as a function of the transparent reach of the modulation format.

The modulation format used on the protecting path can be any modulation format, including the modulation format used on the working path.

In embodiments the method comprises setting the modulation format of a protection optical connection for a priority connection demand to have a longer transparent reach than the modulation format of the working optical connection for the priority demand. The protection path is usually longer than the working path, but it can happen that the reach of the modulation format used for the working connection is long enough for covering also the length relative to the protection connection.

In embodiments the method comprises for a priority connection demand, while provisioning the working and protection optical connections,
selecting a shortest available path from the defmed physical topology
selecting a modulation format with a maximum capacity from the plurality of modulation formats of the optical transponder at the source node,
if the modulation format does not allow transparency up to the destination node of the priority demand, selecting a modulation format providing a longer transparent reach and a lower capacity,
if the capacity of the selected modulation format is lower than the capacity of the priority demand, provisioning a regenerator on the optical path.

In embodiments the method comprises for a non-priority connection demand, while provisioning the working optical connections,
selecting a shortest available path from the defined physical topology
selecting a modulation format with a maximum capacity from the plurality of modulation formats of the optical transponder at the source node,
if the modulation format does not allow transparency up to the destination node of the non-priority demand, selecting a modulation format providing a longer transparent reach and a lower capacity,
if the capacity of the selected modulation format is lower than the capacity of the non-priority demand, provisioning a regenerator on the optical path.

In embodiments the method further comprises the step of splitting a non-priority demand capacity between several tunnels within different optical connections.

In embodiments the network is a WDM network and an optical connection is physically carried by an optical wavelength channel.

In embodiments the method further comprises:
defining a capacity ratio of the non-priority demands to be provided with protection paths,
determining the capacity of the transparent tunnels of the second transparent virtual topology that have been provisioned for protecting the non-priority demands,
if the determined capacity is lower than the defined capacity ratio, selecting protection paths and provisioning additional protection optical connections for protecting non-priority demands up to the defined capacity ratio.

In embodiments a protection optical connection provisioned for a priority demand is shared with another priority demand.

In an embodiment, the invention provides a device for provisioning optical connections in an optical network (18) having a defined physical topology, the device comprising:
a data repository comprising a traffic matrix defining a plurality of connection demands, each connection demand comprising a source (A), a destination (B), a capacity (3), and a quality of service, and wherein the quality of service is selected in a group comprising a priority class (11) and non-priority class (12),
the device further comprising data processing means configured to carry out the steps of:
   selecting working paths (6, 16) and provisioning working optical connections along the working paths for satisfying all priority demands,
   selecting protection paths (7, 17) wherein the protection path for a connection demand is disjoint from the working path of said connection demand and provisioning protection optical connections along the protection paths for satisfying all priority demands,
   computing a first virtual transparent topology consisting of a first remaining available capacity (4) of the provisioned optical connections,
   selecting working paths within the virtual transparent topology and provisioning transparent tunnels (2, 14) along the working paths satisfying all non-priority demands for which the virtual transparent topology comprises a remaining capacity sufficient to satisfy the non-priority demands
   selecting working paths and provisioning additional working optical connections for satisfying any remaining non-priority demands,
   computing a second virtual topology consisting of a second remaining available capacity of all provisioned optical connections, and
   selecting protection paths within the second transparent virtual topology and provisioning transparent tunnels (1, 104) for protecting a non-priority demand using the second remaining capacity, and
   providing a connection map for implementing the provisioned connections in the optical network.

Aspects of the invention are based on the idea of designing an optical network that is able to transport a mix of priority and non-priority traffic propagating together on a same optical connection, i.e. on the same wavelength channel.

Aspects of the invention stem for the observation that an optical connection can transport transparently with a given modulation format a certain datarate; hence complex modulation formats allow transporting higher capacity but cover shorter distances.

Aspects of the invention are based on the idea that an optical transponder can switch to a simpler format (and thus transport less bit rate) to cover a longer reach.

Aspects of the invention are based on the idea of computing the capacity that can be transported by an optical connection as a function of distance length of the working path and the recovery path.

Aspects of the invention stem for the observation that the protection path for the optical connection for recovery may be longer than the working path.

Aspects of the invention are based on the idea of providing an optical transport network (OTN) adapted to switch automatically to protection connections in response to a failure so as to drop some non-priority traffic while recovering the whole priority traffic. Aspects of the invention are based on the idea of calculating the amount of priority traffic that can be transported by the protection path transparently until the destination; while the amount of non-priority capacity is obtained by considering the extra capacity that can be added to the priority traffic so that the working connection can reach transparently the destination node while transporting the priority and non-priority traffic.

### Brief description of the drawings

These and other aspects of the invention will be apparent from and elucidated with reference to the embodiments described hereinafter, by way of example, with reference to the drawings.
Figure 1 is a conceptual representation of the capacity of a wavelength channel in an optical fiber.
Figure 2 is a schematic representation of a 3-nodes WDM optical network wherein a connection demand is provided with a transparent working optical connection and a transparent protection optical connection.
Figure 3 is a schematic representation of the capacity of a transparent working connection and a transparent protection connection in the optical network of Figure 2.

### Detailed description of the embodiments

In optical networks, data can be transmitted using optical links between the network nodes. Most of the time, the optical links are optical fibres. In these fibres, optical signals at different wavelengths are used, which is known as wavelength division multiplexing (WDM). At each wavelength, an optical signal transports a data signal. The network nodes can switch high amounts of high speed data signals between a large number of input and output ports.

An optical network comprises a plurality of nodes and each node of the plurality of nodes is able to transmit data with or without Optical/Electrical/Optical regeneration. The amount of data that can be recovered or sent by a particular node is a constraint to design the node. Namely, the number of transceivers Tx and receivers Rx is calculated to correspond to the amount of data.

The design of an optical network requires to take into account the traffic demand matrix, to provision optical connections between the nodes and regenerators wherever necessary on the optical path while routing the traffic demands. The traffic demand matrix includes all connection demands of the customers. Each connection demand is defined by a source, a destination, a capacity and a class of priority, also called quality of service (QoS). The characteristics of a connection demand serve to establish a corresponding optical connection, that may be signaled as a Label Switch Path (LSP) in a MPLS or GMPLS control plane. A single connection demand can be routed on several different paths from a source node to a destination node via several different nodes. Hence, the solution to route a connection demand on the optical network is generally not unique. Moreover, a second path may be defined for some connection demands as a function of the class of priority of these connection demands. Hence the phase of the design of the network is complex as a lot of alternatives coexist. A planning routine will be described below to meet the constraint of low cost and maximum efficiency. First, some concepts that are necessary to define the planning routine will be described below in reference to the Figures

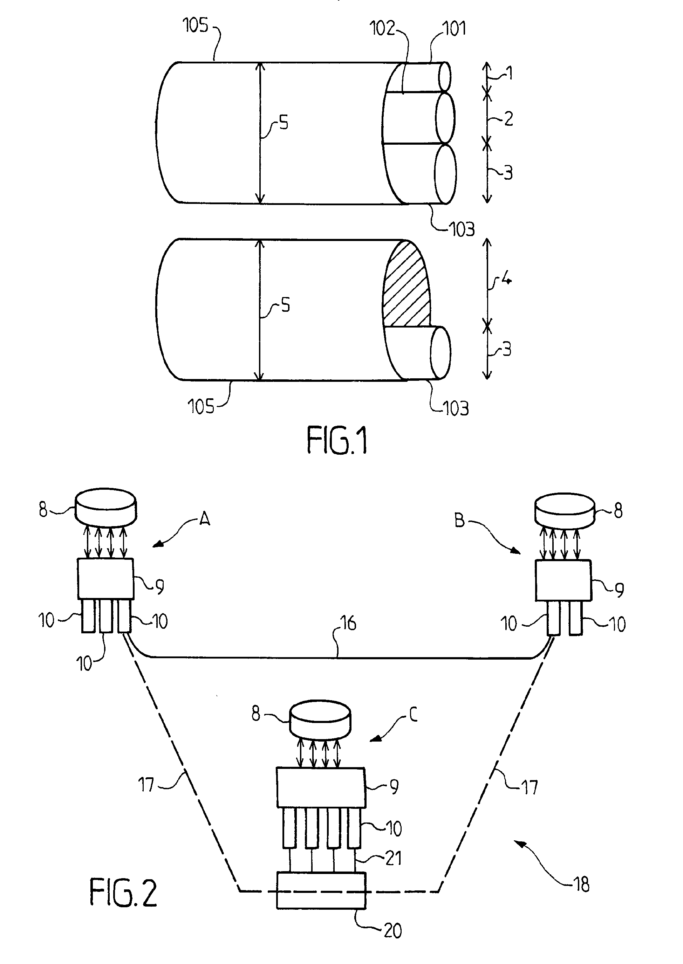

With reference to Figure 1, in the optical network, an optical connection 105 is used to transmit simultaneously data from a plurality of connection demands. A different Label Switch Path is associated to each connection demand.
The optical connection 105 has a capacity 5 also called datarate, e.g. of 40 Gbits. The optical connection 105 is physically supported by a wavelength channel in an optical fiber of a WDM optical network. In the optical connection 105, tunnels 101, 102 and 103 have been represented. The tunnels employ parts of the capacity 5 of the optical connection 105. More precisely the tunnel capacity corresponds to the capacity of a specific connection demand to which the tunnel is associated. For example, as shown in the lower part of Figure 1, when a connection demand 103 of a capacity 3 of 15 Gbits is provided with a tunnel 103 within the optical connection 105, there still remains an available capacity 4 of 25 Gbits within the optical connection 105. Another tunnel 102 of capacity 2 of 15 Gbits may be provided within the available capacity 4 of the optical connection 105 for satisfying another connection demand, as shown in the upper part of Figure 1. There also remains an available capacity of 10 Gbits that can be used to provide a last tunnel 101 of capacity 1 of 10 Gbits inside the optical connection 105.

Figure 1 has illustrated the fact that a connection demand can share an optical connection with another connection demand in an optical network. The planning routine that will be described below will exploit this possibility.

With reference to Figure 2, WDM optical network 18 having three nodes A, B and C is represented. As an example, the provisioning of a working optical connection and of a protection optical connection that satisfy one connection demand is shown. Node A is a source point for the connection demand and node B is a destination point for this connection demand. Two optical connections along two different paths are provided for satisfying this connection demand. The first path is a direct path from node A to node B and the second path is a path via node C from node A to node B. Along the second path a protection connection is provisioned in order to avoid the loss of traffic in case of fiber cut or other damages on the first path. The first path carries a working connection 16 and the second path carries a protection connection 17 for the connection demand.

The node C includes an IP router 8, an electrical switch 9, WDM Tranceivers Tx and Receivers Rx 10, optical add and drop ports 21 and transparent optical switch 20. Nodes A and B are similar to node C, e.g. with different number of Tx and Rx 10. Node C is capable of regenerating an optical signal that arrives on the transparent optical switch 20, by passing the optical signal through a drop port 21 to a Rx 10, where it is converted to electrical signal, switched in electrical switch 9 to a Tx 10 where it is converted to a regenerated optical signal that is sent in an add port 21 to the switch 20. However, the optical signal of the optical connection 17 as shown is not regenerated in node C as it passes through the optical switch 20 transparently. Therefore optical connection 17 is referred to as a transparent optical connection. The protection connection 17 of Figure 2 transmits data transparently at a capacity that depends on the distance to cover between nodes A and B without regeneration. The optical network of Figure 2 illustrates one constraint of the planning routine that will be further described, that is to avoid using regenerators as much as possible for cost and energy efficiency.

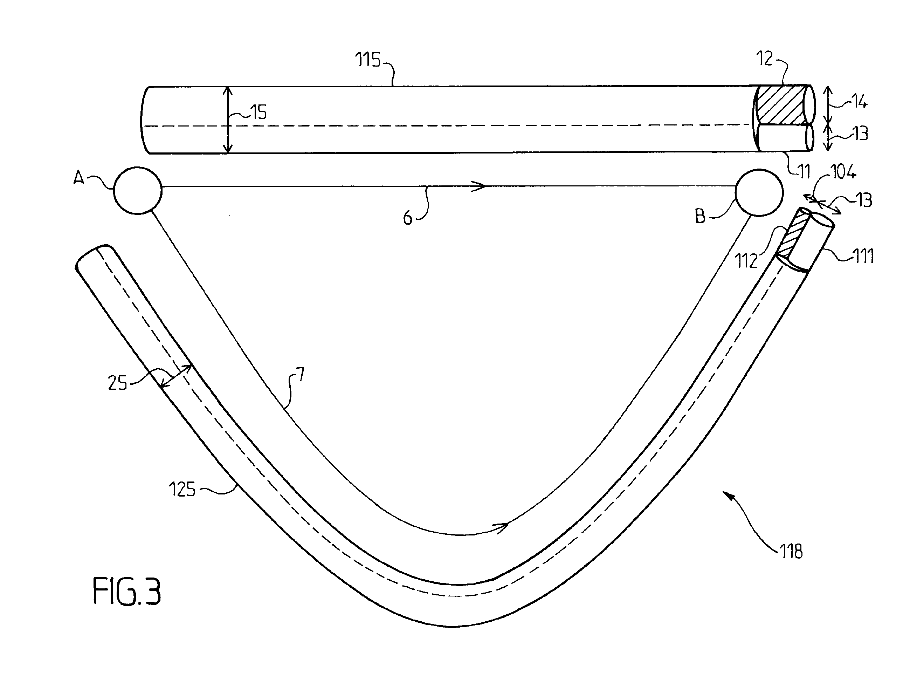

Hence, the planning routine serves to calculate how to allow transparency on the working path and on the protection path of a connection demand. This is done by exploiting a relationship between transparent reach, modulation format and capacity that will now be described with reference to Figure 3.

With reference to Figure 3, an optical network 118 that has the same topology as network 18 of Figure 2 is represented. Node C is omitted because Figure 3 emphasizes the transparent optical connections that have been provisioned to route two connection demands of different class of priority from a source node A to a destination node B.

The first connection demand is a connection demand of priority class, called priority demand. The second connection demand is a connection demand of non-priority class, called non-priority demand. Two transparent connections have been provisioned to reach node B from node A. A first connection 115 follows a direct path 6 and a second connection125 follows an indirect path 7 via a third node C that has not been represented as explained. The second path 7 via node C is longer than the first direct path 6.

The provisioning of optical connections in network 118 has been conducted while respecting general principles described below:
- An optical connection may serve to provide a plurality of tunnels associated to a plurality of connection demands in the optical network.
- A priority demand must be re-routed through a protection connection in case of fiber cut on the working path.
- All working connections and protection connections are preferably transparent. In the case where a transparent working or protection connection is not possible, a certain number of regenerators have to be placed along the working or protection path.

The provisioning of network 118 has been conducted while respecting these principles by the succession of steps described below.
- A first optical connection 115 is provisioned along the shortest path to reach node B, that is the first path, to define a working path 6 for the priority demand. The first optical connection 115 is called working connection. The working connection 115 has a capacity 15 that is provided to satisfy a priority demand of a capacity 13 lower than the first optical connection capacity 15. So this priority demand is allocated with a transparent tunnel 11 of capacity 13 within the working connection 115.
- A second transparent optical connection 125 is provisioned along the protection path 7 for the priority demand. The second optical connection 125 is called protection connection. The whole priority demand capacity 13 has to be protected by provisioning a protection tunnel 111 of the same capacity 13 within the protection connection 125. Since the capacity of the optical connection 125 is calculated to allow the priority demand to reach node B transparently, and since the protection path 7 is longer than the working path 6, a modulation format that reduces the capacity while increasing the robustness and hence increasing the transparent reach was selected for the protection connection 125.

With reference to Table 1, a list of modulation formats that may be employed by optical transponders is given with the associated capacity and transparent reach, i.e. a maximum length for the optical connection to be transparent. Transparent reach in Table 1 represents a scale factor with respect to the transparent reach of a PDM-QPSK format. Moreover, the used modulation formats in Table 1 are all multiplexed in polarization and in the denotations, PDM stands for Polarization Division Multiplexing. The modulation speed is 32Gbaud for the sake of illustration.

**Table 1 - Modulation format, capacity and transparent reach**

| Modulation format | Capacity (Gbit/s) | Transparent reach (scale factor) |
|---|---|---|
| PDM-SP-QPSK | 75 | 1.6 |
| PDM-QPSK | 100 | 1 |
| PDM-SP-8QAM | 125 | 0.64 |
| PDM-8QAM | 150 | 0.4 |
| PDM-SP-16QAM | 175 | 0.28 |
| PDM-16QAM | 200 | 0.2 |

With the formats list in Table 1, each wavelength channel, hence each optical connection can transport capacity between 75Gb/s and 200Gb/s when modulation speed is 32Gbaud and modulation format is changed from low complexity, i.e. SP-QPSK which codes 3 bits per symbol to higher complexity format such as 16QAM which codes 8 bits per symbol. When a more complex modulation format is selected, transparent transmission reach is reduced as the format is less tolerant to noise.

Table 1 shows that transmission reach may be improved by about 40% when bit rate is reduced by less than 15%, when bit rate is reduced by 20 to 25%, transmission reach may be improved by about 60%.

Keeping this in mind, a less complex modulation format is selected for the protection connection 125 than for the working connection 115 because the protected path 7 is longer than the working path 6 and that, in this example, the modulation format used on the working path 6 cannot reach transparently the destination node through the longer protected path 7. For example, the working connection 115 employs QPSK, SP-8QAM or 8QAM while the protection connection employs simpler modulation to cover longer transparent distance e.g. SP-QPSK or QPSK. Hence, the capacity 25 of the protection connection 125 is lower than the capacity 15 of the working connection 115 in the example shown.
- The non-priority demand is now aimed to be provided with a working connection. The remaining capacity of the first optical connection 115 is equal to the capacity 14. In the example shown, the non-priority demand has a capacity equal to capacity 14. As the optical connection 115 can be shared for demands of different class of service as seen with reference to Figure 1, the remaining available tunnel of capacity 14 is used to route the non-priority demand along the working path 6.
- The non-priority demand is not necessary aimed to be provided with a protection connection. But after having provided the priority connection demand with the tunnel 11, there remains a capacity 104 on the protection connection 125 that is available at no further cost. Capacity 104 is lower than the capacity 14 of the non-priority demand. Hence the connection 125 can only transport a portion of the capacity 14 of the non-priority demand. The remaining capacity 104 of connection 125 is then used to protect a portion of the non-priority demand by establishing a corresponding transparent protection tunnel 112 within optical connection 125.

Hence, the ratio between the non-priority capacity 14 transported along the working path and the non-priority capacity 104 transported along the protected path is not 100% as in Dedicated Back-up Path Protection scheme 1+1 or as in Shared Back-up Path Protection scheme 1:1. The ratio depends on the capacity that remained available after all mandatory connections and tunnels were established, i.e. working connections and protection connections for all priority traffic and working connections for all non-priority traffic. This ratio is for example 30% in the example shown on Figure 3. By contrast, the ratio between the priority capacity transported in the working connection 115 and in the protection connection 125 is aimed to be always 100%.

Some concepts have been explained and described above with reference to the figures in very simple examples for the sake of clarity. The optical network described above is a three-node network and the number of tunnels in the connections described is limited to two or three.

A general method will now be described below in order to provision a more complex optical network having any number of nodes in response to traffic matrices. The method meets the constraints of provisioning working and protection connections or tunnels for all connection demands of different priority class and provisioning a protection for a maximum of the connection demands while limiting the number of transponders. In a general manner, an optical connection can be shared between any number of different connection demands of any priority class. A single optical connection may include a working tunnel for a connection demand and a protection tunnel for another connection demand. In a more general manner, Figure 3 can also be viewed as a part of a larger network. This longer optical network is provisioned as a whole by employing a planning routine that takes as inputs the physical network topology, i.e. the physically existing nodes, fibers and transponders, and the capacity that is wanted to be transported from the source nodes to the destination nodes as expressed in a traffic matrix.

For the sake of simplicity, it is assumed that no traffic at all is initially present in the network.

In the planning routine, a given transparent reach r is considered. The reach r is associated to one or more modulation formats, hence one or more capacities. A transparent physical topology called TPT(r) made of feasible transparent optical connections is defmed for the reach r, as follows: the direct optical connections that directly connect any pair of neighbor nodes are automatically inserted in the transparent physical topology, for all direct optical connections having a path shorter or equal than r. Further optical connections called auxiliary connections are added to this topology, each auxiliary connection is an optical connection between two non-neighbor nodes having a distance shorter or equal than the considered reach r that can be provisioned. All possible auxiliary connections are added in the transparent physical topology TPT(r).

The TPT(r) issued from a given network topology differs from the network topology because firstly, the direct optical connections longer than r are taken away and secondly the indirect optical connections are present, that are called auxiliary connections.

The available capacity on each optical connection of a considered TPT(r) depends on the modulation formats selected to achieve the transparent reach r.

The modulation format to be employed in a given optical connection can be selected as follows: the modulation format must have a transparent reach longer or equal to the connection path length. If several formats are suitable, the format providing the higher capacity is selected.

Being T_{G} the traffic matrix containing all the priority demands, requiring protection paths and also called Gold demands, and T_{BE} the traffic matrix containing all the non-priority connection demands also called Best-Effort demands.

The possibility of splitting a connection demand on several paths is called bifurcation. As an example, a 50Gb/s demand can be routed as follows: 10Gb/s over a first path, 20Gb/s over a second path and the remaining 20Gb/s over a third path.

In reference with these general definitions, the planning routine used to provision optical connections in the optical network is described below in a step-by-step scheme:
1. Create the transparent physical topology TPT(r)
2. For all demands belonging to T_{G}
   2.1. Find a cycle (disjoint working and protection paths) from the source to the destination of the considered demand
   2.2. Define the number of optical signal and modulation format of each for serving this connection demand minimizing the whole number of optoelectronic resources: add/drop ports and regenerators for both the working and protection connections. Determine the number of tunnels for the priority demand and the capacity required to set-up the priority demand. The working tunnel and the protection tunnel of the priority demand have the same capacity,
   2.3. If Shared Back-up Protection is allowed: share the protection tunnel capacity with other connection demands that do not belong to the same shared risk group (SRG).
3. For all tunnels that go along the working path
   3.1. Consider optically transparent sections of the tunnel, i.e. between two optoelectronic devices, such as Add/Drop devices and regenerators,
   3.2. If the capacity of the optical connection carrying the working tunnel is higher than the demand capacity, the capacity of the optical connection carrying such tunnel is updated to the remaining capacity that is set available for the best effort traffic The remaining capacity is the difference between the optical connection capacity and tunnel capacity serving the priority demand,
   3.3. Generate a virtual transparent topology made of all the optical connections provisioned up to this point for serving the priority demands and having non-null remaining capacity. The links of the transparent virtual topology are called virtual connections. As an example, the capacity 4 of the optical connection 105 of Figure 1 is a virtual connection of the virtual transparent topology.
4. For all demands belonging to T_{BE}
   4.1. If the bifurcation of non-priority demands is not allowed
      4.1.1.Select all the virtual connections with capacity above the non-priority demand capacity and create a subset of the transparent virtual topology only with these virtual connections,
      4.1.2.Find the shortest path to destination,
      4.1.3.If no path is found,
      4.1.4.Add to the transparent virtual topology created at step 4.1.1 the auxiliary connections present in TPT, to determine where to add the working optical connections necessary to carry the non-priority traffic and find the shortest path to destination,
      4.1.5.If the found path contains virtual connections, update the available capacity of the virtual connection by decreasing the available capacity by the capacity of the considered non-priority demand,
      4.1.6.If the found path contains auxiliary connections, determine the number of tunnels for the best effort demand and the used capacity required to satisfy the non-priority demand. The number of tunnels depends on the number of used optical connections and the optical connections capacity relates to the chosen datarate.
   4.2. If the bifurcation of non-priority demands is allowed
      4.2.1.Select all the virtual connections with capacity above demand capacity and create a subset of the virtual transparent topology only with these connections,
      4.2.2.Find the k-shortest paths from the source node to the destination node that are the combination constituted by the concatenation of available tunnels, k denoting the number of paths through which the non-priority demand is splitted,
      4.2.3. Starting from the shortest to the longest path of the selected k-shortest paths
         4.2.3.1. Update the virtual connection capacity by decreasing its capacity with the one of the considered non-priority demand,
         4.2.3.2. If the capacity of the selected non-priority demand is not entirely served, route the non-priority demand capacity that has not been served to the next path of the k-shortest path list,
      4.2.4.If no path is found, cancel steps 4.2.3.1 and 4.2.3.2
         4.2.4.1. Add to the virtual transparent topology created at step 4.2.1 the auxiliary connections present in TPT to determine where to add the optical connections necessary to transport the non-priority traffic.
         4.2.4.2. Find the k-shortest paths to destination,
         4.2.4.3. Starting from the shortest to the longest path of the selected k-shortest paths
            4.2.4.3.1. Update the virtual connection capacity by decreasing its capacity with the one of the considered non-priority demand,
            4.2.4.3.2. If the capacity of the selected non-priority demand is not entirely served, route the non-priority demand capacity that has not been served to the next path of the k-shortest path list.
   4.3. For all the auxiliary connections used for routing the selected non-priority demand, determine the number of tunnels for the non-priority demand and the used capacity required to set-up the non-priority demand. The number of tunnels depends on the number of used optical connections and the optical connection capacity relates to the chosen capacity,
   4.4. Add the new virtual connections with non-null available capacity to the TPT.
5. Compute the cost of the network when found virtual connections are set-up. The calculation includes the cost of the transponders for add and drop functions and the cost of the regenerators as well as the switch OTN and the router costs.
6. Save the set of found virtual connections, and the network cost to the solution relative to r in a memory device.
   From the optical connections that has been selected with this routine to serve the priority and non-priority demands, some tunnel capacities still remains available. It is then possible to use these tunnel capacities to create a protection path for a portion of the non-priority demands by following the following steps. The available capacities of those provisioned tunnels make up a second virtual topology. The only connections that can be used to create protection tunnels in the steps below are those of the second virtual topology. Taking this in mind, the next step conducted by the routine is described below
7. Compute a second virtual topology consisting of a second remaining available capacity of all provisioned optical connections, and
   7.1. Select protection paths within the second transparent virtual topology,
   7.2. Provision transparent tunnels along the protection paths for protecting a non-priority demand using the second remaining capacity.

After having conducting all these steps, the updated solution for the network provisioning is set. Then, the ratio of the non-priority demand capacity that is protected is evaluated.

In an embodiment, a defined ratio of the non-priority demand capacity that is due to be protected is defined. The defined ratio is called threshold. If the ratio of the non-priority demands capacity that is protected is lower than this threshold, then the step 7 is followed by the successive steps 4, 5, 6 by considering in the step 4 not all demands belonging to T_{BE} but the threshold ratio of non-priority demand capacity that is due to be protected.

With reference again to illustrative Figure 3, the connections shown may be obtained by employing the routine above described. The protection obtained for the non-priority traffic is partial, because for the non-priority demand, the tunnel capacity 104 on the working path 6 is lower than the tunnel capacity 14 on the protection path 7. As soon explained, the ratio between the non-priority capacity transported along the working path and the protected path is not 100%.

For the priority demand, if the capacity 13 of the priority demand was higher than the working connection capacity, two solutions may be considered. A first solution would be to add a connection demand (meaning to use another wavelength channel). A second solution would be to place a regenerator on the working path to increase the working connection capacity available by allowing choosing a more complex modulation format. The same consideration applies for the protection path.

If a threshold ratio, say 40% was defined higher than the ratio obtained, say 30%, then two solutions would be to consider. A first solution would be to add an optical connection for satisfying the protection of the 10% ratio of the non-priority traffic that has not been protected. A second solution would be to place a regenerator on an already provisioned optical connection, that could increase the capacity of the optical connection.

To decide between both solutions the solution that minimizes the use of Optical/Electrical/Optical resources is selected. If Optical/Electrical/Optical resources use is equal, the solution that minimizes spectrum occupancy is selected.

Electrical routers can manage tunnels belonging to different classes of services. In the above routine, it is possible to distinguish among tunnels dedicated to priority and non-priority traffic. A tunnel corresponds to an LSP (Label Switch Path), also called tunnel-LSP, which is configured with an RSVP session. Hence we create an LSP for the non-priority traffic and another for the priority traffic. An LSP is used for a MPLS controlled network. Concerning an OTN network, a similar LSP is created and is called Lambda or TDM (time division multiplexing)-LSP. The semantics associated to the LSP is not the same in IP-MPLS or OTN networks, but in both cases labels defming the type of QoS of the tunnel are present, hence it is possible to distinguish between the priority and non-priority traffic.

If there is a contention of resources in the network, like the reduction of capacity when a failure arises in the network and some of the non-priority capacity is dropped, the LSP of the non-priority traffic is modified or deactivated if there is no available capacity. In this manner there is lower capacity explicitly dedicated to the non-priority and some non-priority losses or latency can appear. Concerning the priority traffic, its LSP is maintained and no traffic loss or delay is observed.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for provisioning optical connections in an optical network (118) having a defined physical topology, the method comprises:
- providing a plurality of connection demands, each connection demand comprising a source node (A), a destination node (B), a capacity (3), and a quality of service, and wherein the quality of service is selected in a group comprising a priority class (11) and a non-priority class (12),
- selecting working paths (6, 16) and provisioning working optical connections (115) along the working paths for satisfying all priority demands,
- selecting protection paths (7, 17) wherein the protection path for a connection demand is disjoint from the working path for said connection demand and provisioning protection optical connections (125) along the protection paths for satisfying all priority demands,
- computing a first virtual transparent topology consisting of a first remaining available capacity (4) of the provisioned optical connections,
- selecting working paths within the virtual transparent topology and provisioning transparent tunnels (2, 14) along the working paths satisfying all non-priority demands for which the virtual transparent topology comprises a remaining capacity sufficient to satisfy the non-priority demands,
- selecting working paths and provisioning additional working optical connections for satisfying any remaining non-priority demands,
- computing a second virtual topology consisting of a second remaining available capacity of all provisioned optical connections, and
- selecting protection paths within the second transparent virtual topology and provisioning transparent tunnels (1, 104) along the protection paths for protecting a non-priority demand using the second remaining capacity,
- providing a connection map for implementing the provisioned connections in the optical network.

2. A method in accordance with claim 1, wherein the source node for a connection demand comprises an optical transponder capable of generating optical signals modulated in accordance with a plurality of modulation formats,
wherein the provisioning of an optical connection from the source node comprises selecting a modulation format of the optical transponder as a function of the transparent reach of the modulation format.

3. A method in accordance with claim 2, wherein the method comprises setting the modulation format of a protection optical connection for a priority connection demand to have a longer transparent reach than the modulation format of the working optical connection for the priority demand.

4. A method in accordance with any one of claims 2 to 3, wherein the method comprises for a priority connection demand, while provisioning the working and protection optical connections,
selecting a shortest available path from the defmed physical topology,
selecting a modulation format with a maximum capacity from the plurality of modulation formats of the optical transponder at the source node,
if the modulation format does not allow transparency up to the destination node of the priority demand, selecting a modulation format providing a longer transparent reach and a lower capacity,
if the capacity of the selected modulation format is lower than the capacity of the priority demand, provisioning a regenerator on the optical path.

5. A method in accordance with any one of claims 2 to 3, wherein the method comprises for a non-priority connection demand, while provisioning the working optical connections,
selecting a shortest available path from the defmed physical topology,
selecting a modulation format with a maximum capacity from the plurality of modulation formats of the optical transponder at the source node,
if the modulation format does not allow transparency up to the destination node of the non-priority demand, selecting a modulation format providing a longer transparent reach and a lower capacity,
if the capacity of the selected modulation format is lower than the capacity of the non-priority demand, provisioning a regenerator on the optical path.

6. A method in accordance with any one of claims 1 to 5, further comprising the step of splitting a non-priority demand capacity between several tunnels within different optical connections.

7. A method in accordance with any one of claims 1 to 6, wherein the network is a WDM network and an optical connection is physically carried by an optical wavelength channel.

8. A method in accordance with any one of claims 1 to 7, wherein the method further comprises:
- defining a capacity ratio of the non-priority demands to be provided with protection paths
- determining the capacity of the transparent tunnels of the second transparent virtual topology that have been provisioned for protecting the non-priority demands,
- if the determined capacity is lower than the defined capacity ratio, selecting protection paths and provisioning additional protection optical connections for protecting non-priority demands up to the defined capacity ratio.

9. A method in accordance with any one of claims 1 to 8, wherein a protection optical connection provisioned for a priority demand is shared with another priority demand.

10. A device for provisioning optical connections in an optical network (18) having a defined physical topology, the device comprising:
a data repository comprising a traffic matrix defining a plurality of connection demands, each connection demand comprising a source (A), a destination (B), a capacity (3), and a quality of service, and wherein the quality of service is selected in a group comprising a priority class (11) and non-priority class (12),
the device further comprising data processing means configured to carry out the steps of:
- selecting working paths (6, 16) and provisioning working optical connections along the working paths for satisfying all priority demands,
- selecting protection paths (7, 17) wherein the protection path for a connection demand is disjoint from the working path of said connection demand and provisioning protection optical connections along the protection paths for satisfying all priority demands,
- computing a first virtual transparent topology consisting of a first remaining available capacity (4) of the provisioned optical connections,
- selecting working paths within the virtual transparent topology and provisioning transparent tunnels (2, 14) along the working paths satisfying all non-priority demands for which the virtual transparent topology comprises a remaining capacity sufficient to satisfy the non-priority demands
- selecting working paths and provisioning additional working optical connections for satisfying any remaining non-priority demands,
- computing a second virtual topology consisting of a second remaining available capacity of all provisioned optical connections, and
- selecting protection paths within the second transparent virtual topology and provisioning transparent tunnels (1, 104) for protecting a non-priority demand using the second remaining capacity, and
- providing a connection map for implementing the provisioned connections in the optical network.

## Amended claims

### Amended claims in accordance with Rule 137(2) EPC.

**1.** A method for provisioning optical connections in an optical network (118) having a defined physical topology, wherein the method comprises:
- providing a plurality of connection demands, each connection demand comprising a source node (A), a destination node (B), a capacity (3), and a quality of service, and wherein the quality of service is selected in a group comprising a priority class (11) and a non-priority class (12),
- selecting working paths (6, 16) and provisioning working optical connections (115) along the working paths for satisfying all priority class demands,
- selecting protection paths (7, 17) wherein the protection path for a connection demand is disjoint from the working path for said connection demand and provisioning protection optical connections (125) along the protection paths for satisfying all priority class demands,
**characterized in that** the method also comprises:
- computing a first virtual transparent topology consisting of a first remaining available capacity (4) of the provisioned optical connections,
- selecting working paths within the first virtual transparent topology and provisioning transparent tunnels (2, 14) along the working paths satisfying all non-priority class demands for which the first virtual transparent topology comprises a remaining capacity sufficient to satisfy the non-priority class demands,
- selecting working paths and provisioning additional working optical connections for satisfying any remaining non-priority class demands,
- computing a second virtual topology consisting of a second remaining available capacity of all provisioned optical connections, and
- selecting protection paths within the second transparent virtual topology and provisioning transparent tunnels (1, 104) along the protection paths for protecting a non-priority class demand using the second remaining capacity,
- providing a connection map for implementing the provisioned connections in the optical network.

**2.** A method in accordance with claim 1, wherein the source node for a connection demand comprises an optical transponder capable of generating optical signals modulated in accordance with a plurality of modulation formats, wherein the provisioning of an optical connection from the source node comprises selecting a modulation format of the optical transponder as a function of the transparent reach of the modulation format.

**3.** A method in accordance with claim 2, wherein the method comprises setting the modulation format of a protection optical connection for a priority connection demand to have a longer transparent reach than the modulation format of the working optical connection for the priority class demand.

**4.** A method in accordance with any one of claims 2 to 3, wherein the method comprises for a priority connection demand, while provisioning the working and protection optical connections,
selecting a shortest available path from the defined physical topology, selecting a modulation format with a maximum capacity from the plurality of modulation formats of the optical transponder at the source node,
if the modulation format does not allow transparency up to the destination node of the priority class demand, selecting a modulation format providing a longer transparent reach and a lower capacity,
if the capacity of the selected modulation format is lower than the capacity of the priority class demand, provisioning a regenerator on the optical path.

**5.** A method in accordance with any one of claims 2 to 3, wherein the method comprises for a non-priority connection demand, while provisioning the working optical connections,
selecting a shortest available path from the defined physical topology, selecting a modulation format with a maximum capacity from the plurality of modulation formats of the optical transponder at the source node,
if the modulation format does not allow transparency up to the destination node of the non-priority class demand, selecting a modulation format providing a longer transparent reach and a lower capacity,
if the capacity of the selected modulation format is lower than the capacity of the non-priority class demand, provisioning a regenerator on the optical path.

**6.** A method in accordance with any one of claims 1 to 5, further comprising the step of splitting a non-priority class demand capacity between several tunnels within different optical connections.

**7.** A method in accordance with any one of claims 1 to 6, wherein the network is a WDM network and an optical connection is physically carried by an optical wavelength channel.

**8.** A method in accordance with any one of claims 1 to 7, wherein the method further comprises:
- defining a capacity ratio of the non-priority class demands to be provided with protection paths
- determining the capacity of the transparent tunnels of the second transparent virtual topology that have been provisioned for protecting the non-priority class demands,
- if the determined capacity is lower than the defined capacity ratio, selecting protection paths and provisioning additional protection optical connections for protecting non-priority class demands up to the defined capacity ratio.

**9.** A method in accordance with any one of claims 1 to 8, wherein a protection optical connection provisioned for a priority class demand is shared with another priority class demand.

**10.** A device for provisioning optical connections in an optical network (18) having a defined physical topology, the device comprising:
a data repository comprising a traffic matrix defining a plurality of connection demands, each connection demand comprising a source (A), a destination (B), a capacity (3), and a quality of service, and wherein the quality of service is selected in a group comprising a priority class (11) and non-priority class (12),
the device further comprising data processing means configured to carry out the steps of:
- selecting, working paths (6, 16) and provisioning working optical connections along the working paths for satisfying all priority class demands,
- selecting protection paths (7, 17) wherein the protection path for a connection demand is disjoint from the working path of said connection demand and provisioning protection optical connections along the protection paths for satisfying all priority class demands,
**characterized in that** the device is further configured to carry out:
- computing a first virtual transparent topology consisting of a first remaining available capacity (4) of the provisioned optical connections,
- selecting working paths within the first virtual transparent topology and provisioning transparent tunnels (2, 14) along the working paths satisfying all non-priority class demands for which the first virtual transparent topology comprises a remaining capacity sufficient to satisfy the non-priority class demands
- selecting working paths and provisioning additional working optical connections for satisfying any remaining non-priority class demands,
- computing a second virtual topology consisting of a second remaining available capacity of all provisioned optical connections, and
- selecting protection paths within the second transparent virtual topology and provisioning transparent tunnels (1, 104) for protecting a non-priority class demand using the second remaining capacity, and
- providing a connection map for implementing the provisioned connections in the optical network.
